# FASCICULE DE BREVET EUROPEEN

(11) **EP 0 584 203 B1**
(45) Date de publication et mention de la délivrance du brevet: **27.09.1995**
(21) Numéro de dépôt: 92911484.1
(22) Date de dépôt: 18.05.1992
(51) Int. Cl.: G06K 11/14

(54) **SYSTEME DE DESSIN GRAPHIQUE**
ZEICHENGRAPHIKSYSTEM
GRAPHIC DRAWING SYSTEM

(30) Priorité: 17.05.1991 FR 9106010
(43) Date de publication de la demande: 02.03.1994
(73) Titulaire: D'AVIAU DE PIOLANT, Jean-Louis, F-33610 Cestas (FR)
(72) Inventeur: D'AVIAU DE PIOLANT, Jean-Louis, F-33610 Cestas (FR)
(74) Mandataire: Joly, Jean-Jacques
(86) Numéro de dépôt international: FR9200442
(87) Numéro de publication internationale: WO9221103

(56) Documents cités:
- EP-A- 0 151 959
- EP-A- 0 199 526
- EP-A- 0 349 322
- FR-A- 2 551 542
- GB-A- 2 018 427
- US-A- 3 917 955
- US-A- 4 814 552

## Description

La présente invention concerne d'une façon générale un système de dessin graphique, du type comprenant :
- une surface de dessin;
- un stylet apte à être déplacé sur la surface pour simuler des tracés;
- des moyens de détermination des coordonnées du stylet dans le plan de la surface par rapport à une référence;
- des moyens de traitement reliés aux moyens de détermination de coordonnées, pour créer ou actualiser une image numérique en utilisant les coordonnées du stylet; et
- des moyens d'affichage de ladite image sur un écran, reliés aux moyens de traitement.

Un tel système est connu de E.P.-A-0 199 526, qui correspond au préambule de la revendication 1.

Dans un tel système, la largeur du tracé effectué reste constante quel que soit le tracé effectué. Ceci constitue une limitation importante, notamment pour les créateurs graphiques, car il est alors impossible d'obtenir sur l'image formée des pleins et des déliés.

La présente invention vise à pallier cet inconvénient de la technique antérieure.

Un autre objet de l'invention est de proposer un système permettant à l'utilisateur de s'affranchir de la taille souvent réduite d'un écran à tube cathodique ou à cristaux liquides, tout en effectuant les tracés directement sur l'image en cours de formation.

Un autre objet encore de l'invention est de proposer des moyens d'impression permettant de restituer des pleins et déliés de tracés simulés sur la surface de dessin.

Elle propose à cet effet un système de dessin graphique du type mentionné en introduction, caractérisé en ce que les moyens de détermination des coordonnées du stylet comprennent des moyens pour déterminer les coordonnées d'une pointe du stylet et des moyens pour déterminer un vecteur d'orientation du stylet permettant de déterminer à son tour la largeur du tracé simulé.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels:
la figure 1 est une vue d'ensemble schématique et en perspective d'un système de dessin graphique selon l'invention,
la figure 2 est une vue en élévation de côté d'un mode de réalisation possible d'une partie du système de la figure 1,
la figure 3 est une vue en perspective d'un stylet faisant partie du système de l'invention,
la figure 4 illustre sous forme de schéma-bloc la conception du stylet de la figure 3 du point de vue électrique.
la figure 5 est un ensemble de chronogramme illustrant le fonctionnement du stylet et des moyens de détermination des coordonnées de celui-ci,
la figure 6 illustre un tracé simulé et un tracé réel reproduit à partir du tracé simulé,
la figure 7 illustre schématiquement en vue de dessus une table traçante faisant partie du système de l'invention,
la figure 8 est une vue en perspective d'une pointe fibreuse de traçage selon l'invention, et
la figure 9 est une vue en coupe horizontale de la pointe de traçage de la figure 8.

On notera préliminairement que, d'une figure à l'autre, des parties ou éléments identiques ou similaires seront désignés par les mêmes signes de référence.

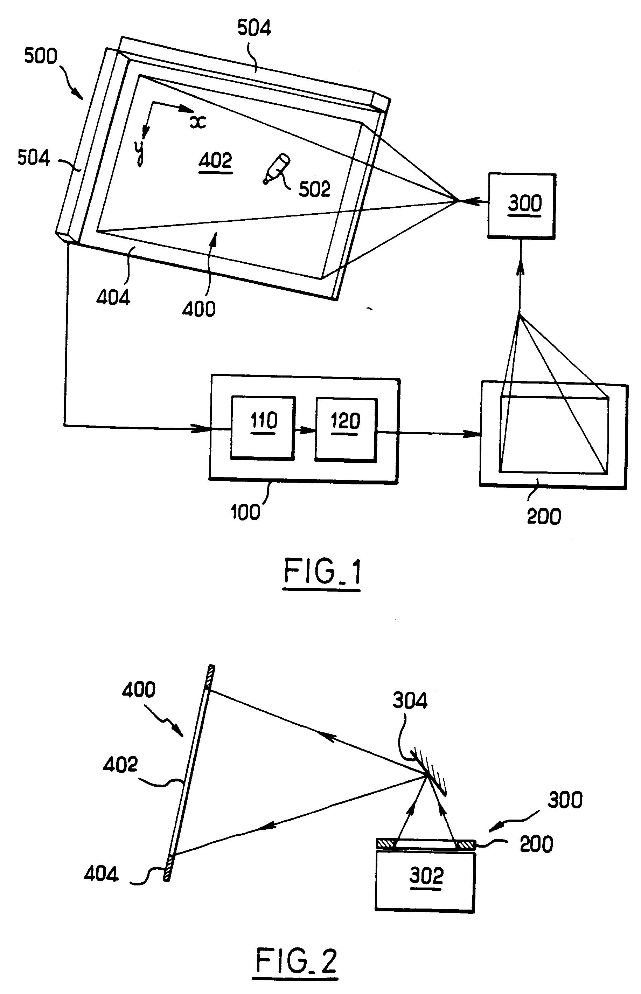

On a représenté sur la figure 1 une station de dessin, par exemple une station de création graphique, assistée par ordinateur qui comprend une unité centrale 100 comportant des moyens de traitement 110 du genre microprocesseur, une mémoire vive 120 ainsi que d'autres équipements classiques, non représentés, tels que mémoire de masse, circuits d'entrée/sortie, clavier, etc...

L'unité centrale 100 est reliée à un écran d'affichage 200, constitué par exemple par un écran à cristaux liquides à affichage en couleurs et à haute définition, destiné à afficher une image en cours de création.

Un dispositif de rétroprojection 300 permet de rétro-projeter sur un écran translucide 400, à partir de l'arrière de celui-ci, l'image présente sur l'écran 300.

L'écran translucide 400 comprend une surface de travail 402 translucide entourée d'un cadre opaque 404.

Enfin le système graphique comprend un dispositif d'acquisition de données graphiques qui comprend un stylet 502, de préférence du type sans fil, et des moyens 504 de détection de la position du stylet (coordonnées x, y) dans le plan de l'écran 400.

Le fonctionnement du système de la présente invention est schématiquement le suivant: lorsqu'un opérateur simule sur l'écran 402, à l'aide du stylet 502, un tracé, ce tracé est fourni à l'unité centrale sous forme d'un ensemble de coordonnées x,y de la position du stylet à différents instants.

Ce tracé simulé est mis en mémoire par l'unité centrale et utilisé pour créer ou actualiser une image affichée sur l'écran 200, et ceci en temps réel. Cette actualisation est reproduite, via les moyens de rétroprojection 300, sur l'écran translucide, de telle sorte que le dessinateur, à mesure qu'il exécute le tracé simulé, peut observer en totale superposition avec ce tracé l'apparition d'un tracé réel correspondant.

Bien entendu, le dispositif de détection de position 500, l'unité centrale 100 et les moyens de rétroprojection sont conçus pour assurer la superposition précitée. En particulier, les valeurs numériques de coordonnées précitées, transmises par le dispositif 500 à l'unité centrale 100, sont corrigées par un coefficient multiplicateur ou diviseur approprié de manière à ce qu'un pas élémentaire de déplacement au niveau des coordonnées corrigées corresponde à un déplacement du stylet 502, verticalement ou horizontalement, sur une distance égale à la dimension correspondante d'un élément d'image élémentaire ou pixel de l'image formée sur l'écran translucide 400. Par exemple, la résolution du système peut être de l'ordre de 1mm, c'est-à-dire qu'un pixel de l'image formée sur l'écran 200 puis projetée sur l'écran 400 a des dimensions horizontale et verticale de l'ordre de 1mm, tandis qu'un déplacement du stylet horizontalement ou verticalement sur cette même distance induit une variation d'une unité de l'information de coordonnée après correction.

L'unité centrale 100 peut être constituée de tout micro-ordinateur ou station de travail graphique approprié. par exemple on peut utiliser un ordinateur personnel basé sur un microprocesseur de type INTEL 80386 ou plus puissant, permettant d'actualiser en temps réel des images graphiques à haute définition. L'affichage sur l'écran 200 peut être effectué dans ce cas suivant la norme VGA.

La zone de travail 402 de l'écran translucide 400 peut être constituée par tout matériau translucide ou empilement de matériaux dont au moins un est translucide. On peut utiliser notamment les verres, matières plastiques, papiers ou toiles translucides. Avantageusement, on utilise une matière plastique ou verre translucide dy type utilisé dans le domaine de la photographie ou du cinéma (visionneuses de diapositives, tables de montage, etc...).

Le système de détermination des coordonnées x, y du stylet peut être choisi parmi une vaste gamme de techniques disponibles.

Une première famille de systèmes consiste à mesurer le temps de propagation d'ondes ultrasonores émises par le stylet en direction d'une pluralité de détecteurs, ou selon le trajet inverse. Pour plus de détails, on se réfèrera aux brevets EP-A-0 233 472, FR-A-2 574 947 et EP-A-0 312 481, dont les contenus respectifs sont incorporés à la présente description par référence.

Une autre technique connue consiste à utiliser un rayonnement lumineux. Dans un premier cas, le rayonnement est émis par le stylet (cas notamment des brevets FR-A-2 650 904 et EP-A-0 202 468) et sa position est détectée par des détecteurs tels que des capteurs de type CCD ("Charge Coupled Device").

Dans un second cas, un ou plusieurs rayonnements sont émis à partir des bords de la zone de travail, vers cette zone, et la présence du stylet dans cette zone conduit à une ombre projetée dont la position, représentative de la position même du stylet, est détectée (cas des brevets EP-A-0 125 068, EP-0 279 652, EP-A-0 121 840 et EP-A-0 221 712).

Une autre technique encore consiste à engendrer au niveau du stylet des ondes des choc acoustiques, obtenues par exemple par production d'étincelles, et à mesurer le temps de propagation de ces ondes de choc entre le stylet et des détecteurs microphoniques, par exemple à cellules piézo-électriques. Les brevets US-A-3 838 212, US-A-3 821 491, US-A-3 626 483, US-A-3 821 469 et US-A-4 012 588 ont trait à cette technique. Dans l'exemple représenté sur la figure 1, c'est cette solution qui a été adoptée, le stylet 502 comportant des moyens de production des ondes de choc acoustiques et la référence 504 désignant deux détecteurs microphoniques linéaires capables de mesurer le temps de propagation des ondes selon les axes x et y.

Par ailleurs, on peut utiliser, pour transmettre à partir du stylet des informations représentatives par exemple de son état ou d'un paramètre de tracé quelconque, des moyens d'émission/réception dans le domaine des radiofréquences, comme décrit par exemple dans les brevets EP-A-0 254 297, EP-A-0 259 841 et EP-A-0 307 893.

Plus généralement, on utilise avantageusement tout dispositif de détermination de coordonnées x, y faisant appel de préférence à un signal ondulatoire ou impulsionnel, émis par le stylet. Il peut s'agir en particulier d'un signal lumineux, radiofréquence, acoustique (ondes sonores ou ultrasonores). En outre, on choisit avantageusement un dispositif dans lequel le stylet est dépourvu de fil ou cordon de liaison, qui classiquement constitue une contrainte pour l'utilisateur.

On va maintenant décrire en référence à la figure 2 une forme de réalisation possible pour le système de rétroprojection d'image sur l'écran translucide.

On utilise dans ce cas un écran à cristaux liquides à affichage en couleurs à haute définition 200 fixé sur la surface d'un dispositif de rétroprojection de type classique, du type comprenant un boîtier 302 abritant une source lumineuse et un système de lentilles qui dirige vers un miroir 304 d'inclinaison réglable un faisceau lumineux concentré véhiculant l'image affichée sur l'écran 200 posé sur le boîtier, image restituée par transparence.

Le miroir 304 réfléchit vers l'arrière de l'écran translucide 400 cette image. La position de l'écran 400 est de préférence faiblement inclinée par rapport à la verticale, pour permettre au dessinateur de travailler dans les mêmes conditions que devant un chevalet de peintre.

Afin d'éviter d'éventuels problèmes de défaut de parallaxe dûs à une orientation de l'écran 400 non perpendiculaire à la direction centrale du rayonnement incident, on peut disposer l'écran 200 sur le boîtier de l'appareil de rétroprojection avec une inclinaison choisie en correspondance.

Bien entendu, toute autre configuration du dispositif de rétro-projection peut être envisagée. En particulier, pour rendre le système de l'invention plus aisément transportable, l'écran 200, le rétroprojecteur 300 et l'écran translucide 400 peut être reliés les uns aux autres de façon articulée et pliable.

Dans tous les systèmes de détermination de coordonnées x, y précités, on détecte simplement la position d'une pointe de traçage simulée du stylet 502 dans le plan de la zone de travail. Selon le système tel que revendiqué, on prévoit des moyens pour détecter non seulement la position de la pointe du stylet, mais également l'orientation de la pointe. Ainsi, pour simuler parfaitement le cas où le dessinateur souhaite effectuer des tracés de largeur variable, comme avec une pointe de traçage biseautée et/ou de section allongée, il est nécessaire de connaître à tout instant l'orientation de l'instrument par rapport à une tangente au tracé effectué.

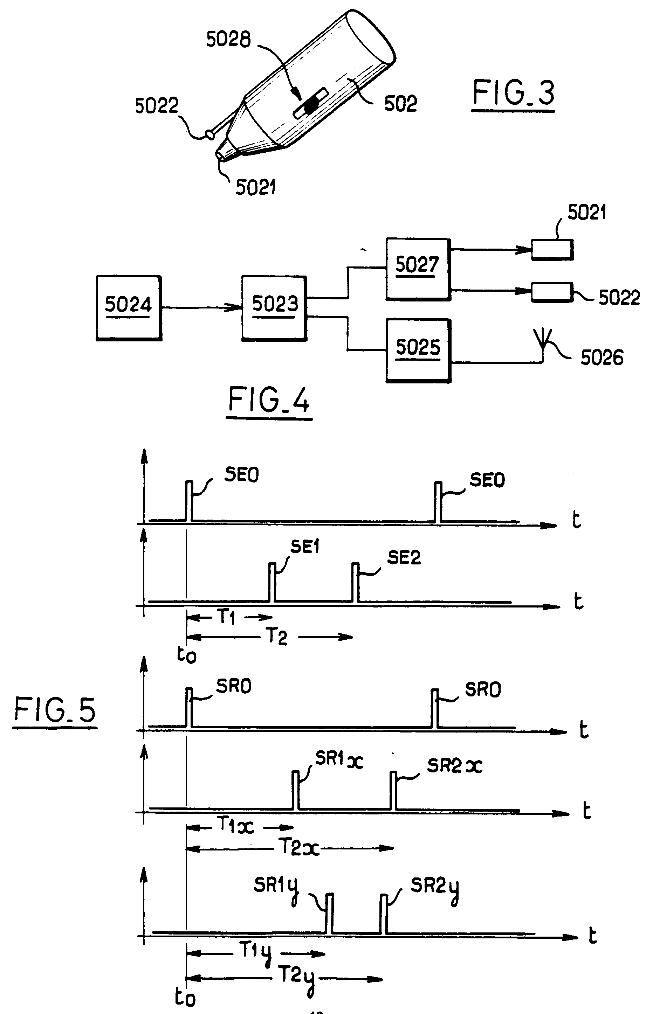

A cet effet, et maintenant en référence aux figures 3 et 4, le stylet 502 comprend deux émetteurs ou transducteurs de signal distincts 5021 et 5022, l'émetteur 5021 simulant une extrémité d'une pointe de traçage allongée, tandis que l'émetteur 5022 est positionné de telle sorte que le segment de droite liant les émetteurs 5021 et 5022 définisse un vecteur d'orientation du stylet. Par exemple, ce vecteur peut être confondu avec le grand axe de ce que serait une pointe de traçage de section transversale allongée.

Les moyens de détermination des coordonnées x,y sont dans ce cas conçus pour détecter à la fois les coordonnées de l'émetteur 5021 et celles de l'émetteur 5022.

Par exemple, on peut prévoir dans le stylet 502 un microcontrôleur ou analogue 5023 qui est cadencé par une horloge appropriée 5024 et qui commande d'une part un émetteur d'un signal radiofréquence, composé d'un circuit d'émission/modulation 5025 et d'une antenne 5026, et d'autre part deux émetteurs de signaux à propagation acoustique, comprenant un générateur 5027 desdits signaux et les deux transducteurs 5021 et 5022, qui peuvent être constitués dans ce cas de systèmes à étincelles, de cellules piézo-électriques, etc...

On va décrire maintenant en référence à la figure 5 le fonctionnement du dispositif. Sur cette figure, on a illustré successivement, de haut en bas, les signaux radiofréquence émis par le stylet, les signaux acoustiques émis par le stylet, les signaux radiofréquence reçus par la partie réceptrice 504 du dispositif 500, les signaux acoustiques reçus par le capteur microphonique de position-x de la partie 504 et les signaux acoustiques reçus par le capteur microphonique de position-y de la partie 504.

A un instant to, le microcontrôleur 5023 commande l'émetteur 5025, 5026 pour l'émission d'un signal radiofréquence de synchronisation, noté SE0 sur la figure 5. Le microcontrôleur provoque alors l'émission par le premier transducteur 5021 d'un premier signal acoustique SE1 après un intervalle de temps T1 et l'émission par le second transducteur 5022 d'un second signal acoustique noté SE2 après un intervalle de temps T2, ces intervalles T1, T2 étant fixes et prédéterminés, et connus par le microcontrôleur 5023.

La partie de réception reçoit le signal SE0 pratiquement instantanément, du fait de la très grande vitesse de propagation propre aux ondes électromagnétiques, pour former le signal de synchronisation en réception SR0 à partir duquel la partie 504 commence à mesurer le temps par exemple en enclenchant un compteur numérique approprié.

Le capteur microphonique de position-x reçoit les impulsions acoustiques SE1 et SE2 à des instants retartés de T1x et T2x par rapport à to (signaux notés SRlx et SR2x), tandis que le capteur microphonique de position-y reçoit ces impulsions acoustiques à des instants retardés de T1y et T2y par rapport à t₀ , ces retards étant déterminés au sein du microcontrôleur grâce au comptage précité.

La coordonnée x1 du transducteur 5021 est obtenue à partir du temps de propagation T1x-T1 du signal acoustique entre ledit transducteur 5021 du stylet et le capteur de position-x. Sa coordonnée y1 est de la même manière dérivée du temps de propagation mesuré T1y-T1.

De la même manière les coordonnées x2, y2 du transducteur 5022 sont déterminées à partir des temps de propagation T2x-T2 et T2y-T2.

Ces données sont acquises par le dispositif 500 à une cadence appropriée, par exemple de quelques centaines à quelques milliers de fois par seconde.

Pour chaque paire de coordonnées x1,y1 et x2,y2, le dispositif 500 ou l'unité centrale 100 (de préférence l'unité centrale) élabore le vecteur d'orientation V0 du stylet, dont les coordonnées sont égales ou proportionnelles (x2-x1, y2-y1). Ce vecteur VO peut éventuellement être normé.

L'unité centrale mémorise le tracé simulé sur l'écran 400 par le dessinateur sous forme d'une successions de coordonnées (x1, y1) du point central du stylet, censé représenter un bord ou extrémité d'une pointe à section allongée d'instrument de traçage, et de coordonnées du vecteur d'orientation associé à ce point. En d'autres termes, on effectue une mémorisation des diverses composantes de l'image en mode vectoriel.

Pour faire apparaître en temps réel ce tracé sur l'écran 400, une largeur de tracé est calculée à partir de chaque valeur de vecteur V0 et du vecteur tangent au tracé effectué. Le vecteur tangent peut par exemple être obtenu à partir des coordonnés courantes x1, y1 de la pointe 5021 et des coordonnées, déterminées immédiatement précédement, de ladite pointe, par simple différence.

La valeur de largeur de tracé peut être obtenue en faisant intervenir par exemple le produit scalaire entre le vecteur d'orientation courant et le vecteur tangent courant.

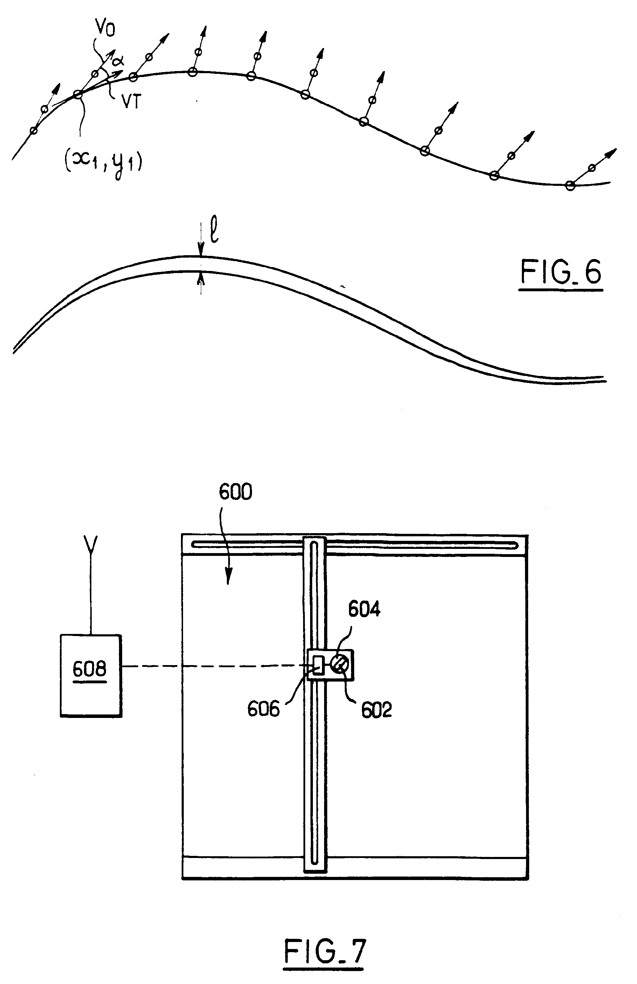

On a représenté sur la figure 6 un tracé simulé auquel sont associés, à intervalles plus ou moins réguliers selon la régularité de la vitesse de tracé par l'utilisateur, une pluralité de cooordonnées (x1,y1) et de vecteurs d'orientation VO. L'angle entre le vecteur tangent VT et le vecteur d'orientation associé est noté α.

En parallèle avec ce tracé a été représenté un tracé affiché. On observe que sa largeur 1 varie de façon croissante en fonction de la valeur de l'angle α, pour prendre une valeur maximale déterminée lorsque cet angle vaut 90°.

Bien entendu, d'autres paramètres de tracé peuvent être transmis avec les signaux de synchronisation et de positionnement émis par le stylet 502.

Ainsi le stylet peut comporter un commutateur (référence 5028 sur la figure 3) qui permet à l'utilisateur de choisir l'une parmi une pluralité de largeurs de pointe de traçage simulée. La position de ce commutateur peut être encodée dans les signaux radiofréquence ou acoustiques émis par le stylet, pour indiquer à l'unité centrale 100 via la partie de réception 504 du dispositif 500 la largeur maximale que peut atteindre le tracé formé sur l'image. Par exemple on peut prévoir un commutateur 5028 à trois positions correspondant à des largeurs par exemple de 5, 8 et 12 mm de la pointe de traçage simulée.

L'encodage des signaux émis en fonction de la position du commutateur peut être effectué par toute technique appropriée. On peut par exemple choisir une fréquence différente pour le signal radiofréquence selon ladite position; on peut encore effectuer une modulation de fréquence dudit signal. Le même genre de traitement peut être appliqué en variante aux signaux acoustiques.

En outre, les signaux radiofréquence et/ou acoustiques peuvent également véhiculer des informations relatives à d'autres paramètres de tracé. Par exemple, un capteur d'effort, avantageusement de type piézo-électrique, peut être prévu pour engendrer un signal électrique analogique représentatif de la force d'appui du stylet sur la surface de l'écran 400. Ce signal peut être véhiculé dans les signaux émis par le stylet, de préférence par modulation. Avantageusement, ce signal est également utilisé pour détecter les débuts de tracés (cas où la pression captée passe d'une valeur nulle à une valeur non nulle) et inversement les fins de tracé.

L'information de pression peut être exploitée avantageusement pour réaliser, sur l'image rétro-projetée et/ou sur l'image imprimée, des densités de couleur différentes en fonction de la pression exercée à l'aide du stylet 502 sur l'écran 400.

Un poussoir peut également être prévu sur le stylet pour permettre à l'utilisateur de choisir des paramètres tels que forme de pointe de traçage simulée, largeur de tracé, couleur de tracé, etc... Par exemple, des appuis manuels successifs sur un tel poussoir permettent de faire afficher successivement sur l'écran, dans un cadre prévu spécialement à cet effet, les diverses couleurs disponibles.

Comme on l'a indiqué, le système de l'invention permet d'actualiser en temps réel une image rétroprojetée sur un écran 400 en fonction des tracés simulés directement sur cet écran. Le système peut comporter également des moyens d'impression des images réalisées. Bien entendu, on peut utiliser des imprimantes couleur de type classique. On peut également utiliser des tables traçantes à instruments de traçage interchangeables.

On a représenté sur la figure 7 une telle table traçante 600. Selon l'invention, l'instrument de traçage 602, qui peut être un instrument de type feutre dont la pointe présente une section allongée, est montée sur un support 604 qui peut tourner autour d'un axe perpendiculaire au plan de la table en étant entraîné par un moteur approprié 606. La rotation de ce moteur est commandée par une unité de pilotage 608 reçevant des informations de l'unité centrale 100. La rotation du support 604 et de l'instrument 602 est effectuée en fonction des informations successives de vecteurs d'orientation mémorisées dans la mémoire 120, pour donner à l'instrument une orientation, par rapport à la tangente au tracé effectué, qui correspond précisément à l'orientation du stylet déterminée comme on l'a décrit plus haut.

De cette manière, on reproduit sur un support papier placé sur la table traçante un tracé dont les variations de largeur suivent précisément les variations de largeur induites par les changements d'orientation du stylet au cours de la simulation de tracé et restitué par ailleurs en temps réel dans l'image rétroprojetée.

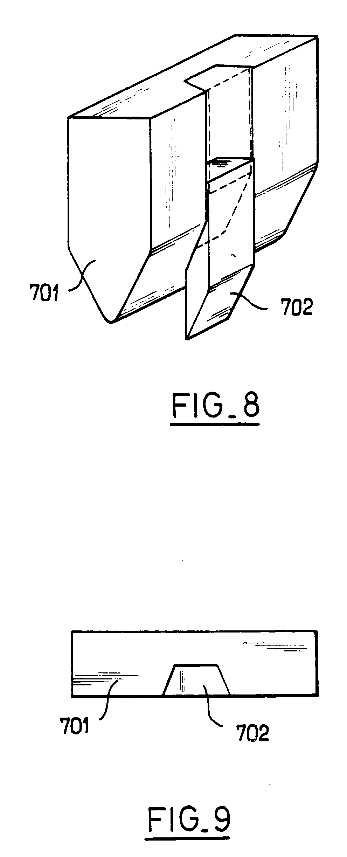

On a illustré sur les figures 8 et 9 une pointe fibreuse 700 pour instrument de traçage. Cette pointe comporte une première partie 701, de section transversale rectangulaire allongée et à extrémité doublement biseautée, et une seconde partie 702, qui est reçue dans une gaine (non représentée) de manière à pouvoir coulisser verticalement par rapport à la première partie, entre une position basse (traits pleins) dans laquelle la partie 702 fait saillie au-dessous de la partie fixe 701, et une position haute (traits tiretés) dans laquelle la partie 702 est en retrait par rapport à la partie 701.

On observe sur la figure 9 que la partie 702 occupe seulement une partie de l'épaisseur de la pointe, en l'espèce environ la moitié de cette épaisseur. On observe également que la partie mobile 702 a une section trapézoïdale. D'autres sections sont bien entendu envisageables.

La pointe 701 a une première largeur prédéterminée, par exemple de 5, 8 ou 12 mm, tandis que la pointe 702 a une largeur moyenne sensiblement inférieure, par exemple de 1 mm.

Grâce à cette disposition, lorsque la pointe 702 est en position haute, la pointe fixe 701 permet d'effectuer un tracé de largeur importante avec une densité de couleur homogène, du fait qu'il n'existe pas de discontinuité dans la largeur de la pointe.

Lorsque la pointe 702 est en position basse, elle permet d'effectuer des tracés beaucoup plus étroits.

La position de la partie mobile 702 peut être commandée par des moyens électro-mécaniques appropriés (électro-aimant ou analogue) à partir de unité centrale 100. Plus précisément, les informations de largeur de pointe de traçage fournies comme indiqué plus haut à l'unité centrale depuis un commutateur du type du comutateur 5028 prévu sur le stylet, sont mémorisées dans la mémoire d'image 120 de l'unité centrale et appliquées à la table traçante pour sélectivement abaisser ou lever la partie mobile 702 pour obtenir la largeur de pointe requise.

Le présent système s'applique non seulement au système à rétroprojection tel que décrit plus haut, mais plus généralement à tout dispositif de saisie de tracés graphique tel que tablette graphique.

Par ailleurs, l'invention s'applique avantageusement dans tous les cas où un utilisateur doit pouvoir créer ou modifier une image de grandes dimensions. Il peut s'agir d'un système de création graphique ou encore d'un outil de présentation d'informations variables à usage éducatif ou autre.

En particulier, on peut prévoir que le système de rétroprojection, ou un deuxième système de rétroprojection, projette une image fixe telle qu'une diapositive ou une image vidéo figée, le stylet étant utilisé alors pour "décalquer" des contours ou analogues apparaissant sur l'image fixe et pour les mémoriser dans l'unité centrale 100. On évite ainsi, grâce à cet aspect de la présente invention, d'avoir à effectuer une exploration point par point ("scanning") de l'image fixe, comme c'est le cas lorsqu'il s'agit de faire apparaître l'image sur un moniteur d'ordinateur, sa seule rétroprojection sur l'écran translucide 400 étant suffisante.

## Revendications

1. Système de dessin graphique, du type comprenant :
- une surface de dessin (400);
- un stylet (502) apte à être déplacé sur la surface pour simuler des tracés;
- des moyens (500) de détermination des coordonnées du stylet dans le plan de la surface par rapport à une référence;
- des moyens de traitement (100) reliés aux moyens de détermination de coordonnées, pour créer ou actualiser une image numérique en utilisant les coordonnées du stylet; et
- des moyens d'affichage (300) de ladite image sur un écran (400), reliés aux moyens de traitement;
caractérisé en ce que les moyens (500) de détermination des coordonnées du stylet comprennent des moyens pour déterminer les coordonnées d'une pointe (5021) du stylet et des moyens pour déterminer un vecteur d'orientation (VO) du stylet permettant de déterminer à son tour la largeur du tracé simulé.

2. Système selon la revendication 1, caractérisé en ce que les moyens (500) de détermination des coordonnées du stylet comprennent des moyens (5021, 5022, 5025-5027) d'émission de signaux ondulatoires ou impulsionnels à partir de ladite pointe (5021) du stylet et d'un point (5022) décalé par rapport à ladite pointe, et des moyens de réception (504) prévus dans la région des bords de ladite surface (400) pour déterminer lesdites coordonnées et ledit vecteur d'orientation (VO) en fonction d'au moins un paramètre des signaux ondulatoires ou impusionnels reçus, ledit vecteur d'orientation étant déterminé en fonction des coordonnées déterminées de ladite pointe (5021) et dudit point décalé (5022).

3. Système selon la revendication 2, caractérisé en ce que les moyens d'émission comprennent des moyens d'émission de signaux à propagation acoustique et des moyens d'émission d'une onde radiofréquence permettant d'effectuer une synchronisation des moyens d'émission et des moyens de réception en vue de mesurer le temps de propagation acoustique desdits signaux à propagation acoustique entre la pointe et le point décalé du stylet d'une part, et les moyens de réception d'autre part.

4. Système selon l'une des revendications 1 à 3, caractérisé en ce que les moyens de traitement (100) comprennent des moyens (120) pour mémoriser les tracés simulés en mode vectoriel.

5. Système selon l'une des revendications 1 à 4, caractérisé en ce qu'il est en outre prévu dans le stylet des moyens (5028) de sélection et/ou de modulation du signal ondulatoire émis en fonction d'au moins un paramètre de tracé, et ce ce qu'il est prévu en association avec les moyens de détermination de coordonnées des moyens d'analyse et/ou de démodulation du signal ondulatoire reçu par les dispositifs de réception, capables de fournir aux moyens de traitement, conjointement avec des informations de coordonnées, des informations représentatives d'un ou de plusieurs paramètres de tracé.

6. Système selon la revendication 5, caractérisé en ce que les paramètres de tracé sont choisis dans le groupe comprenant les couleurs de tracé, les largeurs de tracé, les forces d'appui de tracé et les inclinaisons et rotations du stylet.

7. Système selon la revendication 6, caractérisé en ce que le stylet comporte un moyen de commutation (5028) formant sélecteur de largeur de pointe simulée, relié aux moyens d'émission du signal ondulatoire de manière à provoquer l'émission par lesdits moyens d'ondes différentes selon une largeur simulée de pointe de traçage du stylet, fixée par la position du moyen de commutation.

8. Système selon l'une des revendications 1 à 7, caractérisé en ce que les moyens de traitement comprennent un calculateur (100) équipé de moyens de mémorisation (120) d'une image numérique à haute définition, en ce que les moyens d'affichage comprennent des moyens de rétroprojection de ladite image numérique sur un écran translucide (400), et en ce que ladite surface de dessin constitue ledit écran translucide.

9. Système selon la revendication 8, caractérisé en ce qu'il comprend des moyens de masquage variable pour limiter la taille d'une zone de travail de l'écran translucide.

10. Système selon l'une des revendications précédentes, caractérisé en ce qu'il comprend en outre des moyens d'impression (600) de l'image sur un support physique, les moyens d'impression comprenant une table traçante commandée par les moyens de traitement et comportant au moins un instrument de traçage (602) capable de produire des traits de largeur différente en fonction de son orientation, et des moyens (604, 606, 608) pour faire varier l'orientation dudit instrument en fonction du vecteur d'orientation (VO) déterminé par les moyens de traitement.

11. Système selon la revendication 10, caractérisé en ce que la table traçante comprend au moins un instrument de traçage comportant une pointe fibreuse (700) alimentée par un réservoir d'encre ou peinture, en ce que la pointe fibreuse comprend au moins deux parties dont l'une (701) est solidaire d'un corps de l'instrument de traçage et dont l'autre (702) peut coulisser dans une gaine essentiellement verticalement par rapport à la première partie de manière à sélectivement faire saillie au-delà de ladite première partie, et des des moyens pour déplacer ladite deuxième partie par rapport à la première en fonction d'informations de largeur de pointe simulée reçues des moyens de traitement.

12. Système selon la revendication 11, caractérisé en ce que la première partie (701) de la pointe fibreuse présente une forme allongée en section transversale, et comporte deux grands bords opposés, et en ce que ladite deuxième partie (702) présente une épaisseur inférieure à la distance entre lesdits grands bords.

13. Système selon la revendication 12, caractérisé en ce que ladite deuxième partie (702) de la pointe peut être amenée soit dans ladite position en saillie, soit dans une position située en retrait par rapport à la première partie de manière à ne pas participer au tracé.

## Patentansprüche

1. Zeichengraphiksystem einer Art, die folgende Merkmale aufweist:
- eine Zeichenfläche (400);
- eine Tastnadel (502), die dazu eingerichtet ist, auf der Fläche verschoben zu werden, um Linien zu simulieren;
- Mittel (500) zum Bestimmen von Koordinaten der Tastnadel in der Ebene der Fläche bezüglich eines Bezugspunktes;
- Verarbeitungsmittel (100), die mit den Mitteln zur Bestimmung von Koordinaten verbunden sind, um ein numerisches Bild unter Nutzung der Koordinaten der Tastnadel zu erzeugen oder zu aktualisieren; und
- Mittel zur Sichtbarmachung (300) des genannten Bildes auf einem Bildschirm (400), die mit den Verarbeitungsmitteln verbunden sind;
dadurch **gekennzeichnet**, daß die Mittel (500) zur Bestimmung der Koordinaten der Tastnadel Mittel zum Bestimmen der Koordinaten eines Punktes (5021) der Tastnadel sowie Mittel zum Bestimmen eines Richtungsvektors (VO) der Tastnadel umfassen, um auf seiner Bahn die Breite der simulierten Linie zu bestimmen.

2. System nach Anspruch 1, dadurch **gekennzeichnet**, daß die Mittel (500) zur Bestimmung der Koordinaten der Tastnadel Mittel (5021, 5022, 5025-5027) zum Senden von Wellen- oder Impulssignalen vom genannten Punkt (5021) der Tastnadel aus und von einem Punkt (5022) aus aufweisen, der bezüglich des genannten Punktes entfernt ist, sowie Mittel zum Empfang (504), die im Bereich der Ränder der genannten Fläche (400) vorgesehen sind, um die genannten Koordinaten und den genannten Richtungsvektor (VO) als Funktion mindestens eines Parameters der empfangenen Wellen- oder Impulssignale zu bestimmen, wobei der genannte Richtungsvektor als Funktion der Koordinaten bestimmt wird, die vom genannten Punkt (5021) und vom genannten entfernten Punkt (5022) bestimmt sind.

3. System nach Anspruch 2, dadurch **gekennzeichnet**, daß die Mittel zum Senden Mittel zum Senden von Signalen mit akustischer Ausbreitung sowie Mittel zum Senden einer Hochfrequenzwelle aufweisen, die es gestatten, eine Synchronisierung der Sendemittel und der Empfangsmittel im Hinblick auf die Messung der akustischen Ausbreitungszeit der genannten Signale mit akustischer Ausbreitung zwischen einerseits dem Punkt und dem entfernten Punkt der Tastnadel sowie andererseits den Empfangsmitteln zu bewirken.

4. System nach einem der Ansprüche 1 bis 3, dadurch **gekennzeichnet**, daß die Verarbeitungsmittel (100) Mittel (120) umfassen, um die vektoriell simulierten Linien einzuspeichern.

5. System nach einem der Ansprüche 1 bis 4, dadurch **gekennzeichnet**, daß außerdem in der Tastnadel Mittel (5028) zur Auswahl und/oder Modulierung des Wellensignals vorgesehen sind, das als Funktion mindestens eines Parameters der Linie gesendet wird, und daß in Zuordnung zu den Mitteln zur Bestimmung der Koordinaten Mittel zur Analyse und/oder zur Demodulierung des Wellensignals vorgesehen sind, das von den Empfangsvorrichtungen empfangen wird, die imstande sind, den Verarbeitungsmitteln gemeinsam mit den Koordinateninformationen Informationen zu liefern, die repräsentativ sind für einen oder mehrere Parameter der Linie.

6. System nach Anspruch 5, dadurch **gekennzeichnet**, daß die Parameter der Linie aus der Gruppe ausgewählt sind, die die Farben der Linie, die Breiten der Linie, die Andruckkräfte der Tastnadel sowie die Neigungen und Drehungen der Tastnadel umfassen.

7. System nach Anspruch 6, dadurch **gekennzeichnet**, daß die Tastnadel mindestens ein Verstellmittel (5028) aufweist, das eine Wähleinrichtung für die Breite des simulierten Punktes bildet und mit den Mitteln zum Senden des Wellensignales auf eine solche Weise verbunden ist, daß sie durch die genannten Mittel die Aussendung unterschiedlicher Wellen gemäß einer simulierten Breite des Spurverfolgungspunktes der Tastnadel hervorruft, die für die Lage der Verstellmittel festgelegt ist.

8. System nach einem der Ansprüche 1 bis 7, dadurch **gekennzeichnet**, daß die Verarbeitungsmittel einen Rechner (100) aufweisen, der mit Speichermitteln (120) für ein numerisches Bild hoher Auflösung ausgestattet ist, daß die Sichtbarmachungsmittel Mittel zur Projektion des genannten numerischen Bildes auf einem transluziden Bildschirm (400) aufweisen, und daß die genannte Zeichenfläche den genannten transluziden Bildschirm bildet.

9. System nach Anspruch 8, dadurch **gekennzeichnet**, daß es Mittel zur variablen Abdeckung aufweist, um die Größe einer Bewegungszone des transluziden Bildschirmes zu begrenzen.

10. System nach einem der vorangehenden Ansprüche, dadurch **gekennzeichnet**, daß es außerdem Mittel (600) zum Aufdrucken des Bildes auf einen physischen Träger aufweist, wobei die Mittel zum Aufdrucken einen Anreißtisch bzw. ein Reißbrett aufweisen, der bzw. das durch die Verarbeitungsmittel gesteuert ist und mindestens ein Reißinstrument (602) aufweist, das imstande ist, Linien unterschiedlicher Breite als Funktion seiner Ausrichtung zu erzeugen, sowie Mittel (604, 606, 608), um die Ausrichtung des genannten Instruments als Funktion des Richtungsvektors (VO) ändern zu lassen, der durch die Verarbeitungsmittel bestimmt wird.

11. System nach Anspruch 10, dadurch **gekennzeichnet**, daß der Anreißtisch mindestens ein Reißinstrument aufweist, das eine faserige Spitze (700) umfaßt, die aus einem Tinten- oder Farb-Vorratsbehälter gespeist wird, daß die faserige Spitze mindestens zwei Abschnitte aufweist, von denen der eine (701) fest mit einem Rumpf des Anreißinstruments verbunden ist und der andere (702) in einer Hülse im wesentlichen vertikal in bezug auf den ersten Abschnitt derart gleiten kann, daß er wahlweise über den genannten ersten Abschnitt übersteht, sowie Mittel zum Versetzen des genannten zweiten Abschnitts in bezug auf den ersten Abschnitt als Funktion von Informationen über die Breite des simulierten Punktes, die von den Verarbeitungsmitteln empfangen wurden.

12. System nach Anspruch 11, dadurch **gekennzeichnet**, daß der erste Abschnitte (701) der faserigen Spitze im Längsschnitt eine längliche Form bietet und zwei große, gegenüberliegende Ränder aufweist, und daß der genannte zweite Abschnitt (702) eine Dicke aufweist, die kleiner ist als der Abstand zwischen den genannten großen Rändern.

13. System nach Anspruch 12, dadurch **gekennzeichnet**, daß der genannte zweite Abschnitt (702) der Spitze entweder in die genannte überstehende Lage oder in eine Lage eingestellt werden kann, die in bezug auf den ersten Abschnitt derart zurückgesetzt ist, daß er nicht an der Linie teilnimmt.

## Claims

1. Graphic drawing system, of the type comprising:
- a drawing surface (400);
- a stylet (502) capable of being moved over the surface in order to simulate plotted lines;
- means (500) for determining the coordinates of the stylet in the plane of the surface with respect to a reference;
- processing means (100) connected to the coordinate determination means, in order to create or update a digital image by using the coordinates of the stylet; and
- means (300) for displaying said image on a screen (400), and connected to the processing means;
characterized in that the means (500) for determining the coordinates of the stylet comprise means for determining the coordinates of a tip (5021) of the stylet and means for determining an orientation vector (VO) of the stylet enabling in its turn the width of the simulated plotted line to be determined.

2. System according to claim 1, characterized in that the means (500) for determining the coordinates of the stylet comprise means (5021, 5022, 5025-5027) for emitting undulatory or pulsed signals from said tip (5021) of the stylet and from a point (5022) offset with respect to said tip, and reception means (504) provided in the region of the edges of said surface (400) for determining said coordinates and said orientation vector (VO) as a function of at least one parameter of the undulatory or pulsed signals received, said orientation vector being determined as a function of the determined coordinates of said tip (5021) and of said offset point (5022).

3. System according to claim 2, characterized in that the emission means comprise means for emitting acoustically propagated signals and means for emitting a radiofrequency wave enabling the emission means and the reception means to be synchronized with a view to measuring the time of acoustic propagation of said acoustically propagated signals between the tip and the offset point of the stylet on the one hand, and the reception means on the other hand.

4. System according to one of claims 1 to 3, characterized in that the processing means (100) comprise means (120) for storing the simulated plotted lines in vector mode.

5. System according to one of claims 1 to 4, characterized in that means (5028) for selecting and/or for modulating the undulatory signal emitted as a function of at least one plotted-line parameter are further provided in the stylet, and in that means, are provided in association with the coordinate determination means, for analyzing and/or demodulating the undulatory signal received by the reception devices, which means are capable of supplying to the processing means, in conjunction with coordinate information, information representing one or more plotted-line parameters.

6. System according to claim 5, characterized in that the plotted line parameters are selected from the group comprising the colors of the plotted line, the widths of the plotted line, the plotted line bearing forces and the tilts and rotations of the stylet.

7. System according to claim 6, characterized in that the stylet includes a switching means (5028) forming a selector of the simulated tip width, connected to the means for emitting the undulatory signal so as to cause the emission by said means of different waves according to a simulated width of plotting tip of the stylet, the width being fixed by the position of the switching means.

8. System according to one of claims 1 to 7, characterized in that the processing means comprise a computer (100) equipped with means (120) for storing a high-definition digital image, in that the display means comprise means for back-projecting said digital image onto a translucent screen (400), and in that said drawing surface constitutes said translucent screen.

9. System according to claim 8, characterized in that it comprises variable masking means to limit the size of a working area of the translucent screen.

10. System according to one of the preceding claims, characterized in that it further comprises means (600) for printing the image on a physical medium, the printing means comprising a plotter controlled by the processing means and including at least one plotting instrument (602) capable of producing lines of different width as a function of its orientation, and means (604, 606, 608) for causing the orientation of said instrument to vary as a function of the orientation vector (VO) determined by the processing means.

11. System according to claim 10, characterized in that the plotter comprises at least one plotting instrument including a fibrous tip (700) fed via an ink or paint reservoir, in that the fibrous tip (700) comprises at least two parts, one (701) of which is rigidly attached to a body of the plotting instrument and the other (702) of which can slide in a sheath essentially vertically with respect to the first part so as to project selectively beyond said first part, and means for moving said second part with respect to the first as a function of simulated tip width information received from the processing means.

12. System according to claim 11, characterized in that the first part (701) of the fibrous tip has an elongate shape in transverse cross-section, and comprises two long opposite edges, and in that said second part (702) has a thickness less than the distance between said long edges.

13. System according to claim 12, characterized in that said second part (702) of the tip may be brought either into said projecting position or into a position which is set back with respect to the first part so as not to contribute to the plotted line.
